Europäisches Patentamt

European Patent Office

Office européen des brevets

(11) Publication number: **0 287 024 B1**

# EUROPEAN PATENT SPECIFICATION

(45) Date of publication of patent specification: **29.01.92** (51) Int. Cl.⁵: **B65G 15/08**

(21) Application number: **88105780.6**

(22) Date of filing: **12.04.88**

(54) **A tubular belt conveyor.**

(30) Priority: **16.04.87 JP 91870/87**

(43) Date of publication of application:
**19.10.88 Bulletin 88/42**

(45) Publication of the grant of the patent:
**29.01.92 Bulletin 92/05**

(84) Designated Contracting States:
**AT DE FR IT**

(56) References cited:
**DE-A- 3 404 186**
**US-A- 4 402 395**

(73) Proprietor: **Bridgestone Corporation**
**10-1, Kyobashi 1-Chome Chuo-Ku**
**Tokyo 104(JP)**

(72) Inventor: **Hashimoto, Kunio**
**1767-24, Fujinoki Wakamatsu-ku**
**Kitakyushu-shi Fukuoka-ken(JP)**
Inventor: **Okazaki, Haruo**
**1-2-20, Miyanomachi Yahatahigashi-ku**
**Kitakyushu-shi Fukuoka-ken(JP)**

(74) Representative: **Vetter, Hans, Dipl.-Phys. Dr.**
**Patentanwalte Dipl.-Ing. Rudolf Magenbauer**
**Dipl.-Phys. Dr. Otto Reimold Dipl.-Phys. Dr.**
**Hans Vetter Hölderlinweg 58**
**W-7300 Esslingen(DE)**

## Description

BACKGROUNDS OF THE INVENTION

The present invention relates to a tubular belt conveyor according to the first part of claim 1.

US-A-3,338,383 and US-A-4,402,395 issued to Hashimoto disclose such a tubular belt conveyor in which a flat belt is rolled up into tubular form which conveys powdered or granular material without scattering.

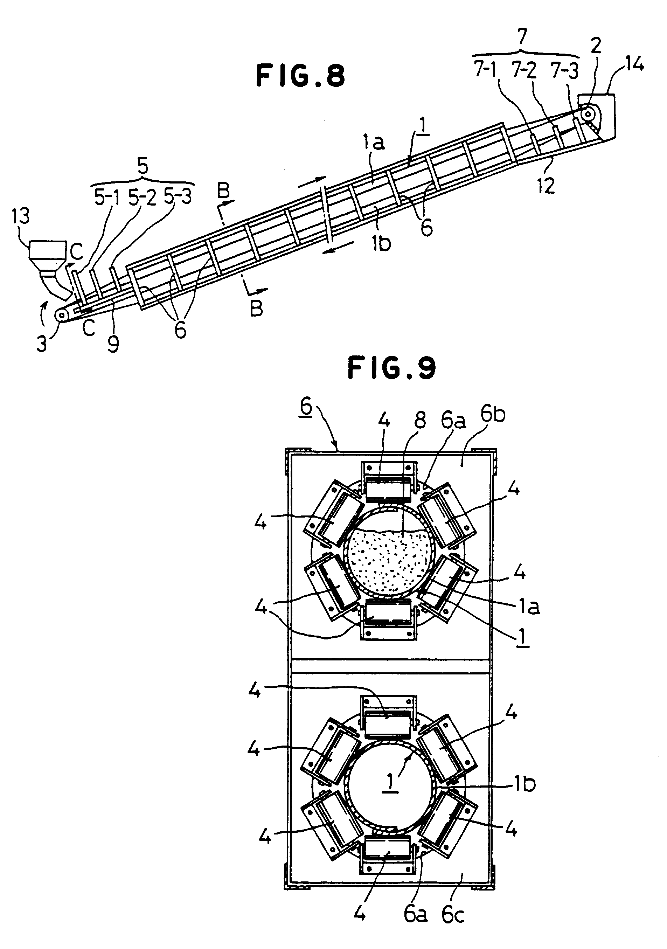

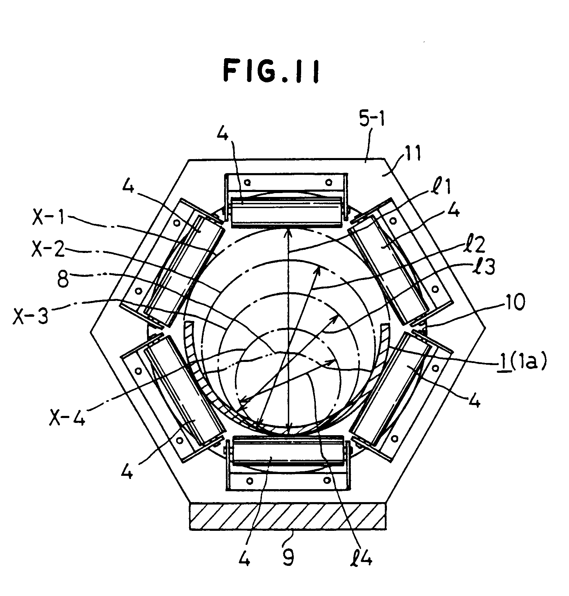

According to Figs. 8 and 11, the known tubular conveyor will be described in detail.

In this known tubular belt conveyor, an endless conveyor belt 1 is wound at its flattened ends around a front end roller 2 and a rear end roller 3 to circulate, and passes through a plurality of guide frames 5, 6 and 7 in which a plurality of guide rollers 4 are arranged in a circle so that the belt may be rolled up into tubular form in which material 8 to be conveyed is wrapped for transportation.

As shown in Fig. 9, the intermediate frame 6 is divided into two chambers, an upper chamber 6a and a lower chamber 6c, each comprising an opening 6a through which the conveyor belt 1 passes and the guide rollers 4 which surround the opening 6a in a circle. An outgoing path 1a and a return path 1b pass through the openings 6a and 6a of the upper and lower chambers 6b and 6c respectively so that each path is maintained in tubular form. Between the rear end roller 3 and the most adjacent guide frame 6, there are three guide frames 5 comprising a first guide frame 5-1, a second guide frame 5-2 and a third guide frame 5-3 at a proper interval on a horizontal frame 9 located between the outgoing and return paths 1a and 1b.

As shown in Fig. 11, each guide frame 5-1, 5-2 and 5-3 comprises a hexagonal frame 11 having an opening 10 at the center, and there are provided a plurality of guide rollers 4, such as six, in a circle to surround the opening 10. In order to reduce the diameters $\ell 1$, $\ell 2$ and $\ell 3$ of the inscribed circles X-1, X-2 and X-3 which are formed by a plurality of guide rollers arranged in a circle, gradually in the running direction of the outgoing path 1a, each guide frames 5-1, 5-2 and 5-3 are the same gradually-reduced forms, so that the outgoing path 1a passing through each opening 10 is gradually rolled up from flattened form to come into the guide frame 6. X-4 is a circle inscribed in each guide roller 4 of the guide frame 5, and $\ell 4$ is its diameter.

Three guide frames 7 disposed between the front end roller 2 and the nearest guide frame 6 comprise a first guide frame 7-1, a second guide frame 7-2 and a third guide frame 7-3 having the same structure as the first, second and third guide frames 5-1, 5-2 and 5-3. The beginning end of the return path 1b passing through the guide frames 7-1, 7-2 and 7-3, the flattened return path 1b which circulates around the front end roller 2 is rolled up gradually into tubular form which runs through the lower chamber 6c of the guide frame 6.

A frame 12 is provided for supporting each guide frame 7-1, 7-2 and 7-3 and is similar to the frame 9. There are provided a hopper 13 for feeding the material 8 to be conveyed onto the outgoing path 1a above the beginning end of the outgoing path 1a near the rear end roller 3 and a receiver 13 around the front end roller 2. The front end roller 2 and/or rear end roller 3 rotates in clockwise direction in Fig. 8 by suitable drive means (not shown), whereby the conveyor belt 1 rotates as shown by arrows in Fig. 8 and is gradually rolled up into tubular form through the guide frame 5, wrapping the conveyed material 8 which is fed from the hopper 13.

When the conveyor belt 1 passes through the upper opening 6a in each guide frame 6 and rotates around the front end roller 2, it opens, so that the conveyed material falls down onto the receiver 14, and is rolled up again into tubular form when it passes through the guide frames 7, whereby it passes through the lower opening 6a of each guide frame 6 and circulates about the rear end roller 3.

The above-mentioned tubular belt conveyor transports the material in a tube. If the conveyed material includes a long piece 8a (in Fig. 10) such as a wooden piece longer than the inner diameter of the tubular portion of the conveyor belt 1 when it transfers earth and sand from reclaimed land, the long piece 8a perpendicular to the running direction of the conveyor belt 1 is transported and bumps against the walls of the conveyor belt 1 which is being rolled up, so that it is disadvantageous to damage a tublar wall of the belt 1 or result in interruption of its running.

OBJECT OF THE INVENTION

It is therefore the object of the present invention to provide a tubular belt conveyor in which conveyed material such as a long wooden piece is smoothly transported without bumping against the tubular wall so as to prevent the belt from subjecting to damage or interruption of running.

BRIEF DESCRIPTION OF DRAWINGS

The advantages of the present invention will become clear by the following description of preferred embodiments of the invention with reference to the accompanying drawings, wherein:

Fig. 1 is a transverse sectional plan view of an outgoing path in a first embodiment of a tubular belt conveyor according to the present invention;

Fig. 2 is a side view of the same;

Fig. 3 is a vertical sectional front view taken along line A-A;

Figs. 4 and 5 are schematic transverse plan views of the main part exhibitting different functions respectively;

Fig. 6 is a transverse sectional plan view of an outgoing path in a second embodiment of a tubular belt conveyor according to the present invention;

Fig. 7 is a vertical sectional view of another embodiment of a conveyor belt of a tubular belt conveyor to which the present invention is adapted;

Fig. 8 is a schematic side view of a known tubular belt conveyor;

Fig. 9 is an enlarged sectional view taken along line B-B;

Fig. 10 is a transverse sectional plan view of a known tubular belt conveyor shown in Fig. 8 and similar to Fig. 1; and

Fig. 11 is an enlarged sectional view taken along line C-C in Fig. 8.

DESCRIPTION OF PREFERRED EMBODIMENTS

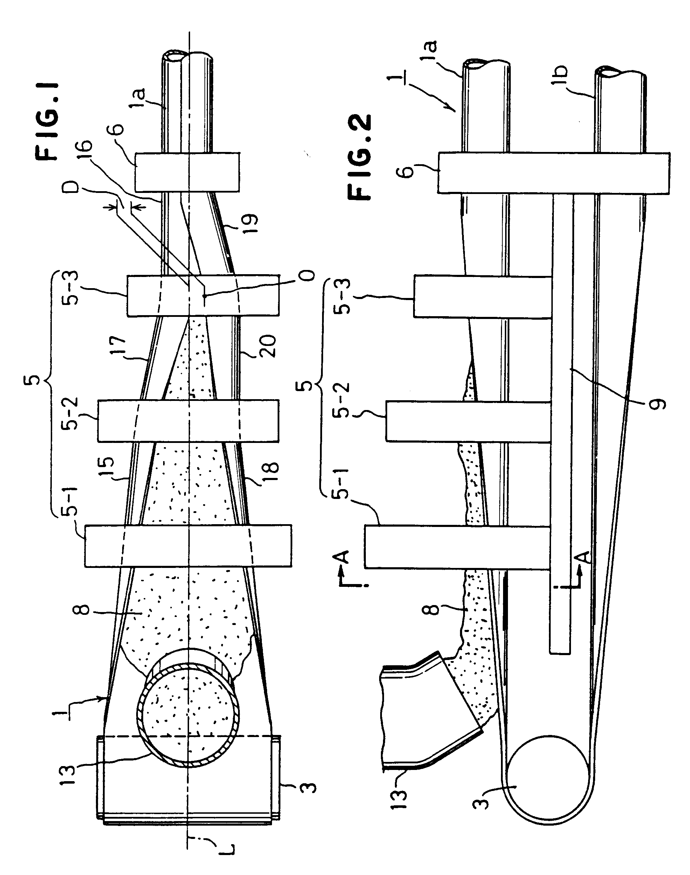

Figs. 1 to 5 illustrate a first embodiment of the present invention, in which the numerals identify parts identical with in the prior art described above and the details will be omitted. The second embodiment which will be described thereinafter is as well.

In the first embodiment, in three guide frames 5-1, 5-2 and 5-3 at the beginning end of an outgoing path 1a, only the third guide frame 5-3 is disposed by placing its center O at a distance D laterally away from the axis L of a conveyor belt 1, so that there are provided a parallel portion which is parallel to the axis L and an inclined portion which is not parallel thereto, one portion being alternate with the other, at the one side of the belt 1 which is rolled up gradually, while there are provided an inclined portion 19 and a parellel portion 20 which is parallel to the axis L at the other side wall 18 opposite to the inclined portion 17.

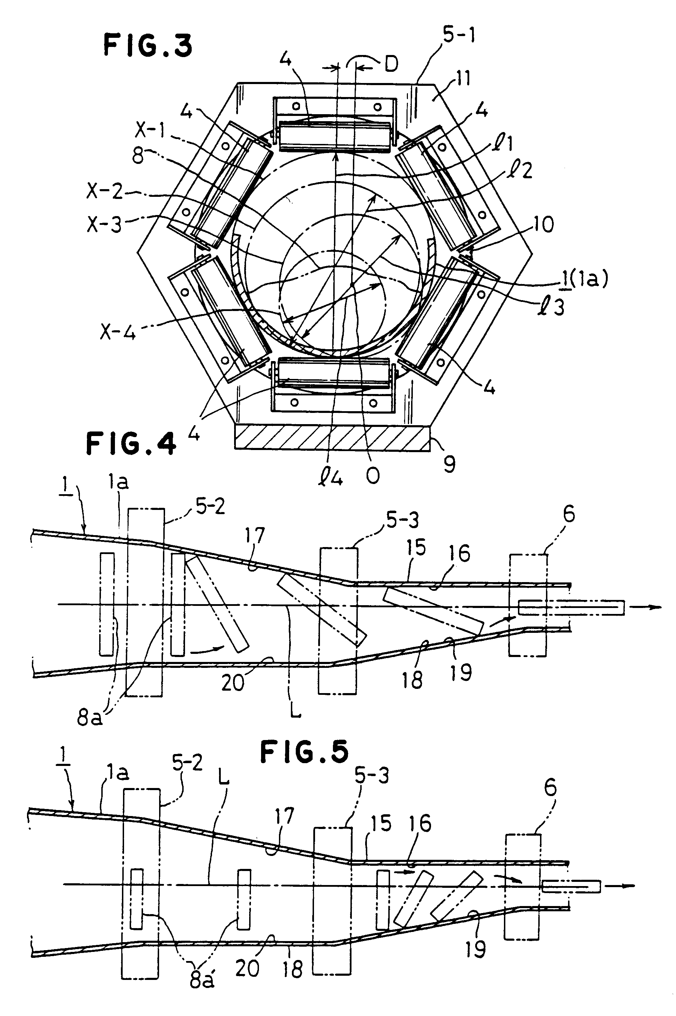

As shown by dotted lines in Fig. 4, the conveyor belt 1 transfers the long piece 8a which is almost as long as a distance between the inclined and parallel portions 17 and 20, with other material, its length being disposed in the radial direction of the belt. Then, one end of the long piece 8 bumps against the inclined portion 17 of the side wall 15, while, with movement of other conveyed material 8, the other end of the long piece 8 rotates forwardly around the one end to reduce an angle to the axis L to less than 90°.

Further, the other end of the long piece 8a bumps against the inclined portion 19 at the side wall 18; however, the long piece 8a is disposed at considerably less than 90° to the axis so that the long piece 8a runs forwardly with the other material 8 without hindering by the inclined portion 19 to reduce the oblique angle thereof further.

Accordingly, the following accidents are completely prevented by the present invention:

1) The conveyor belt 1 is not smoothly rolled up because of the long piece 8a.

2) The long piece extends in the radial direction to make a hole in the wall of the belt or to enlarge the outer diameter partially so that the running of the belt is interrupted.

As shown by dotted lines in Fig. 5, if another long piece 8a' shorter than the long piece 8a and perpendicular to the axis L is transported near the side wall 18 in the conveyor belt 1, it may pass without bumping against the inclined portion 17 at the side wall 15. But, in this case, one end (lower end in Fig. 5) of the long piece 8a' bumps against the inclined portion 19 at the side wall 18, whereby the other end rotates forwardly to make an inclined angle to the axis less than 90° gradually, so that the long piece 8a' passes through a first guide frame 6 without bumping against the wall of the belt 1.

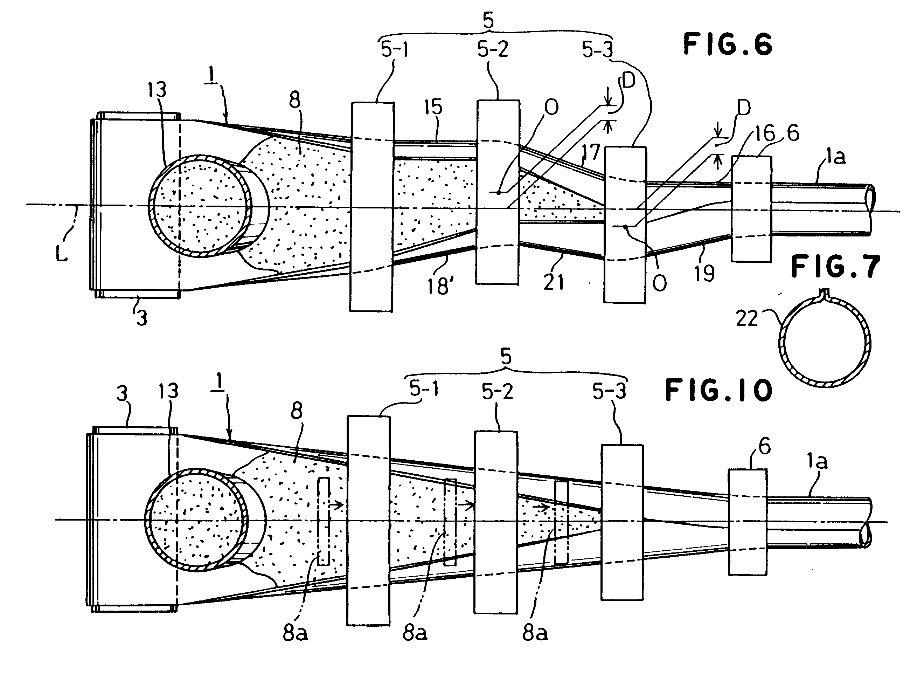

Fig. 6 illustrates a second embodiment of the present invention. In the second embodiment, the third guide frame 5-3 is disposed such that its center is laterally away from the axis L at a distance D and the second guide frame 5-2 is arranged such that its center O is laterally away from the axis L at a distance D in the opposite direction, whereby there is formed an inclined portion 21 which expands in a running direction of the conveyor belt 1 at the side wall 18' of the belt 1 and the other is similar to the above. The second embodiment attains functions and effects similar to those in the first embodiment.

In addition to the above embodiments, other change or modification will be carried out according to the present invention. For example, there may be two sets of guide frames, one set comprising two guide frames, the center of each set being laterally away from the axis L in opposite directions.

Without providing the guide frame 5, any of the guide frames 6 may be arranged by placing their centers laterally away from the axis L.

The above embodiments illustrate a tubular belt conveyor which is rolled up by overlapping the opposed edges of a belt, but as shown in Fig. 7, the present invention may be also adapted to a tubular belt conveyor which is rolled up by bringing the opposed longitudinal edges of a belt into abutment or contacting or approaching the edges.

The present invention provides decrease of possibility that a long piece included in the conveyed material bumps against the conveyor belt which is being rolled up gradually or has been rolled up, whereby it is prevented for the material to block in the belt, damage the wall or interrupt the running of the belt.

It should be noted that the foregoings relate only to preferred embodiments of the present invention and that any modification or variation may be made by persons skilled in the art without departing from the scope of the invention which is determined solely by the appended claims:

## Claims

1. A tubular belt conveyor comprising:
   a front end roller;
   a rear end roller spaced apart from the front end roller along the length of the belt conveyor;
   an endless belt able to be rolled up into tubular form and engageable in flat form with the two end rollers to circulate therebetween for conveying material continuously; and
   a plurality of guide frames disposed at a certain distance along the length of the belt between the two end rollers and having a plurality of guide rollers in a circle through which the belt passes;
   characterized in that
   some of the guide frames are disposed such that their axes are laterally away from the longitudinal axis of the belt.

2. A tubular belt conveyor as defined in claim 1 wherein the guide frames near the front and rear end rollers are disposed such that their axes are laterally away from the longitudinal axis of the belt.

3. A tubular belt conveyor as defined in claim 2 wherein, with respect to the guide frames in which the their axes are laterally away from the axis of the belt, the circles formed by a plurality of guide rollers are gradually reduced in the running direction of the belt.

4. A tubular belt conveyor as defined in any of claims 1 to 3 wherein the two adjacent guide frames are disposed such that their axes are laterally away from the longitudinal axis of the belt in opposite directions.

5. A tubular belt conveyor as defined in claim 1 wherein the belt is rolled up into tubular form by overlapping the opposed longitudinal edges.

6. A tubular belt conveyor as defined in claim 1 wherein the belt is rolled up into tubular form by bringing the opposed longitudinal edges into abutment.

## Revendications

1. Convoyeur à bande transporteuse tubulaire, comprenant:

   un rouleau d'extrémité avant;

   un rouleau d'extrémité arrière, espacé du rouleau d'extrémité avant dans le sens de la longueur du transporteur à bande;

   une bande sans fin, apte à être enroulée en une forme tubulaire et de venir au contact, sous forme aplatie, avec les deux rouleaux d'extrémité, pour produire entre elles une circulation d'un matériau à transporter en continu; et

   une pluralité de châssis de guidage, disposés à une distance déterminée dans la longueur de la bande, entre les deux rouleaux d'extrémité, et présentant une pluralité de rouleaux de guidage, placés en un cercle au travers duquel passe la bande;

   caractérisé en ce que

   certains des châssis de guidage sont disposés de telle façon que leurs axes soient écartés latéralement de l'axe longitudinal de la bande.

2. Convoyeur à bande transporteuse tubulaire selon la revendication 1, dans lequel les châssis de guidage placés près des rouleaux d'extrémité avant et arrière sont disposés de telle façon que leurs axes soient latéralement écartés de l'axe longitudinal de la bande.

3. Convoyeur à bande transporteuse tubulaire selon la revendication 2, dans lequel par rapport aux châssis de guidage dans lesquels les axes sont latéralement écartés de l'axe de la bande, les cercles formés par une pluralité de rouleaux de guidage sont graduellement réduits dans la direction de défilement de la bande.

4. Convoyeur à bande transporteuse tubulaire selon l'une quelconque des revendications 1 à 3, dans lequel les deux châssis de guidage adjacents sont disposés de telle façon que leurs axes soient écartés latéralement de l'axe longitudinal de la bande, en des directions opposées.

5. Convoyeur à bande transporteuse tubulaire selon la revendication 1, dans lequel la bande est enroulée sous forme tubulaire par chevauchement des bords longitudinaux opposés.

6. Convoyeur à bande transporteuse tubulaire selon la revendication 1, dans lequel la bande est enroulée sous forme tubulaire par mise bout à bout des bords longitudinaux opposés.

**Patentansprüche**

1. Schlauchförmiges Förderband, das
   eine vordere Endrolle,
   eine hintere Endrolle, die von der vorderen Endrolle um die Bandstrecke entfernt angeordnet ist,
   ein endloses, zum Aufrollen in die Schlauchform geeignetes Band, das in flacher Form an den beiden Endrollen angreift, um zwischen diesen zur kontinuierlichen Materialförderung umzulaufen, und
   eine Vielzahl von Führungsrahmen aufweist, die in einem bestimmten Abstand entlang der Bandstrecke zwischen den beiden Endrollen angeordnet sind und eine Vielzahl von Führungsrollen in einer Kreisanordnung aufweisen, durch die das Band verläuft, dadurch gekennzeichnet,
   daß einige der Führungsrahmen so angeordnet sind, daß ihre Achsen lateral zu der Längsachse des Bandes versetzt angeordnet sind.

2. Schlauchförmiges Förderband nach Anspruch 1, bei dem die Führungsrahmen in der Nähe der vorderen und hinteren Endrolle so angeordnet sind, daß ihre Achsen lateral zu der Längsachse des Bandes versetzt angeordnet sind.

3. Schlauchförmiges Förderband nach Anspruch 2, bei dem hinsichtlich der Führungsrahmen, deren Achsen lateral zur Achse des Bandes versetzt angeordnet sind, die durch eine Vielzahl von Führungsrollen gebildeten Kreise in der Laufrichtung des Bandes graduell verkleinert sind.

4. Schlauchförmiges Förderband nach einem der Ansprüche 1 bis 3, bei dem zwei benachbarte Führungsrahmen so angeordnet sind, daß ihre Achsen in entgegengesetzten Richtungen lateral zur Längsachse des Bandes versetzt angeordnet sind.

5. Schlauchförmiges Förderband nach Anspruch 1, bei dem das Band in die Schlauchform durch Überlappung der entgegengesetzten Längskanten aufgerollt ist.

6. Schlauchförmiges Förderband nach Anspruch 1, bei dem das Band in die Schlauchform aufgerollt ist, in dem die entgegengesetzten Längskanten in Gegenanlage miteinander gebracht werden.

FIG.1

FIG.2

EP 0 287 024 B1

# FIG.3

# FIG.4

# FIG.5

FIG.6

FIG.7

FIG.10

EP 0 287 024 B1

# FIG.8

# FIG.9

# FIG.II